# FASCICULE DE BREVET EUROPEEN

(11) **EP 4 501 465 B1**
(45) Date de publication et mention de la délivrance du brevet: **11.03.2026**
(21) Numéro de dépôt: 24187652.3
(22) Date de dépôt: 10.07.2024
(51) Int. Cl.: B05B 13/04, B05B 16/40, B24C 3/00, B25J 11/00, B60M 1/28, B24C 1/08

(54) **SYSTÈME DE PROJECTION D'UN PRODUIT SUR UN SUPPORT DE CATÉNAIRE**
SYSTEM ZUM PROJIZIEREN EINES PRODUKTS AUF EINEN FAHRLEITUNGSTRÄGER
SYSTEM FOR SPRAYING A PRODUCT ON A CATENARY SUPPORT

(30) Priorité: 03.08.2023 FR 2308438
(43) Date de publication de la demande: 05.02.2025
(73) Titulaire: SNCF Réseau, 93200 Saint-Denis (FR); Berthier Equipements, 69120 Vaulx-en-Velin (FR)
(72) Inventeur: MEZIANI, Imen, 75015 Paris (FR); TREMBLAY, Julien, 59650 Villeneuve-d'Ascq (FR); THOMAS, Gilles, 93130 Noisy-Le-Sec (FR); MERLE, Philippe, 13007 Marseille (FR)
(74) Mandataire: Fache, Sébastien

(56) Documents cités:
- WO-A1-2021/074327
- US-A1- 2020 032 528
- US-B2- 8 088 450

## Description

### DOMAINE TECHNIQUE

L'invention s'inscrit dans le domaine ferroviaire et concerne plus précisément la rénovation des peintures des supports de caténaires, et en particulier des poteaux caténaires.

L'invention porte plus particulièrement sur un système de rénovation d'un support caténaire.

### ART ANTERIEUR ET INCONVENIENTS DE L'ART ANTERIEUR

Dans le domaine de la circulation ferroviaire, les matériels roulants ferroviaires sont en grande majorité alimentés en électricité via des caténaires disposés au-dessus de la voie ferrée. Ces caténaires sont maintenus au-dessus de la voie ferrée par des supports de caténaires, chaque support comprenant typiquement un armement directement relié au(x) fil(s) conducteur(s) de la caténaire, et un poteau vertical solidaire de l'armement et planté dans le sol à proximité des rails de la voie ferrée. Ce poteau mesure typiquement plusieurs mètres de hauteur, jusqu'à une dizaine de mètres.

Ces supports de caténaires - et notamment les poteaux desdits supports - sont recouverts d'une peinture de protection qui protège lesdits supports de la corrosion. Il est donc nécessaire de prévoir régulièrement des rénovations de la peinture des supports de caténaire, par projections de produits sur ces supports de caténaire.

Ces chantiers de rénovations impliquent de nombreuses contraintes, en particulier le balisage de chantiers, la présence de personnels qualifiés, la coupure de l'alimentation des caténaires entrainant un arrêt ponctuel de la circulation ferroviaire. A ces contraintes s'ajoutent des contraintes liées à la mise en sécurité des personnels chargés de la rénovation, puisque ces derniers doivent escalader les poteaux et se protéger des risques de chute, des passage éventuels de trains et des débris de peinture suite à un décapage manuel des supports caténaires.

Toutes ces opérations sont longues et complexes à mettre en œuvre, présentent un risque pour la sécurité des personnels, et sont couteuses. Un système de projection connu et une installation de projection connue sont décrits dans le document US 2020/032528 A1.

### OBJECTIF DE L'INVENTION

L'invention vise ainsi à proposer un système de projection de produits des supports de caténaires qui pallient les inconvénients de l'art antérieur.

### EXPOSE DE L'INVENTION

À cet effet, le système de protection d'au moins un produit sur un support de caténaire comprend :
- Des moyens de projection du produit sur ledit support ;
- Des moyens de commande desdits moyens de projection du produit ;
- Un bras de déplacement des moyens de projection du produit, lequel bras de déplacement est articulé multiaxes rendant les moyens de projection susceptibles d'être déplacés autour du support de caténaire, et piloté par les moyens de commande, et
- Une plate-forme élévatrice du bras de déplacement et pilotée par les moyens de commande - des moyens de protection configurés pour entourer au moins une partie du support de caténaire.

Le système de l'invention peut également comporter les caractéristiques optionnelles suivantes considérées isolément ou selon toutes les combinaisons techniques possibles :
- Les moyens de projection comprennent des moyens d'application d'une peinture fraîche sur le support caténaire.
- Les moyens de projection comprennent des moyens de décapage mécanique d'une ancienne peinture préalablement appliquée sur le support de caténaire.
- Les moyens de décapage et les moyens d'application de la peinture fraiche comprennent respectivement une buse de sablage ou d'aérogommage et une buse de pulvérisation de la peinture fraiche solidaires d'un châssis, lequel châssis est solidaire d'une extrémité du bras de déplacement.
- Le système comprend des moyens d'acquisition d'images solidaire du châssis.
- Le système comprend des moyens de nettoyage des moyens d'acquisition d'images.
- Les moyens de nettoyage comprennent une buse de soufflage d'air comprimé solidaire du châssis.
- Les moyens de protection comprennent deux bras articulés de protection entre une position repliée et une position déployée dans laquelle lesdits deux bras de protection sont aptes à entourer au moins une partie du support de caténaire, et deux bâches de protection chacune comprenant un bord solidaire du bras de protection considéré, chaque bâche s'étendant tout le long du bras de protection considéré.
- Le système comprend des moyens de détection des obstacles, notamment des moyens de détection par temps de vol.
- Les moyens de commande comprennent une manette de pilotage du bras de déplacement, laquelle manette comprend au moins une gâchette homme mort.

L'invention vise également une installation de projection comprenant un support de caténaire et un système de projection d'au moins un produit sur le support de caténaire, caractérisé en ce que le système de projection comprend :
- des moyens de projection du produit sur ledit support,
- des moyens de commande desdits moyens de projection du produit,
- un bras de déplacement des moyens de projection du produit, lequel bras de déplacement est articulé multiaxes rendant les moyens de projection déplaçables autour du support de caténaire, et piloté par les moyens de commande, et
- une plate-forme élévatrice du bras de déplacement pilotée par les moyens de commande - des moyens de protection configurés pour entourer au moins une partie du support de caténaire.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue en perspective du système de rénovation de l'invention installe autour d'un poteau d'un support de caténaire ;
[Fig. 2] La figure 2 représente une vue de côté du système de la figure 1 positionné à la base et autour du poteau ;
[Fig. 3] La figure 3 représente une vue de côté du système de la figure 1 positionné en hauteur autour du poteau ;
[Fig. 4a] La figure 4a représente un bras articulé de protection en position repliée ;
[Fig. 4b] La figure 4b représente un bras articulé de protection en position déployée ;
[Fig. 5] La figure 5 représente un détail du système de rénovation de la figure 1 prévu pour être fixé à l'extrémité d'un bras articulé de déplacement.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention.

La présente invention concerne un système de projection de produits sous forme pulvérulente et/ou sous forme d'aérosol sur les supports de caténaire 17, et plus particulièrement sur les poteaux verticaux 18 de ces supports de caténaire 17.

Un tel poteau 18, comme indiqué ci-dessus, est classiquement recouvert d'une peinture destinée à le protéger de l'humidité et autres aléas climatiques. Lorsque cette peinture est usée, et/ou commence à s'écailler, il est nécessaire de rénover ce poteau de caténaire 18, et le cas échéant tout le support de caténaire 17, en utilisant le dispositif de projection 1 de l'invention.

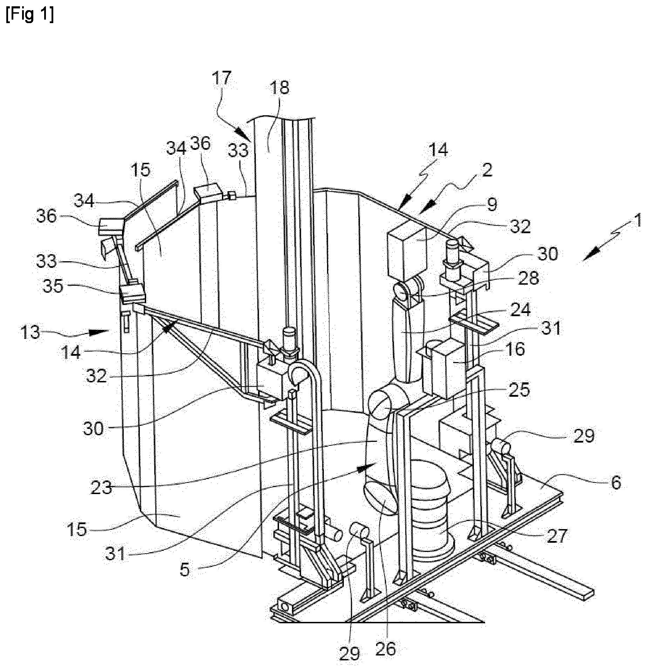

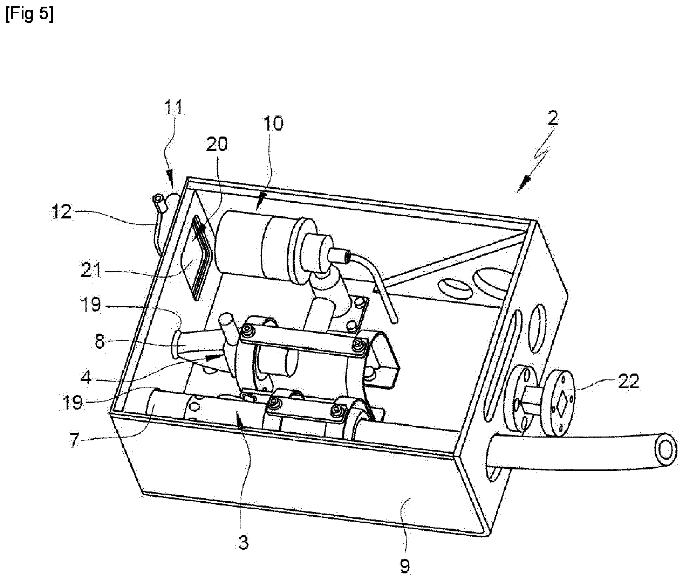

En référence aux figures 1 et 5, le système de projection comprend un dispositif de projection de produits 2 sur le support de caténaire 17, lequel dispositif de projection 2 comprend des moyens de décapage mécanique 3 de l'ancienne peinture préalablement appliquée sur le support 17 et le poteau 18, par exemple par aérogommage ou sablage, et des moyens d'application d'une peinture fraîche 4 par pulvérisation sur le support de caténaire 17 préalablement décapé.

Les moyens de décapage 3 comprennent une buse de sablage ou préférentiellement d'aérogommage 7, qui est conçue pour projeter à basse pression sur la surface à décaper un mélange d'air comprimé et d'un abrasif naturel (minéral ou végétal). Les moyens de décapage 3 sont donc reliés à un réservoir d'abrasif et à un compresseur d'air pour former un ensemble de décapage. Typiquement, le débit d'air fourni par le compresseur est compris entre 1000 et 10000 L/min, et est préférentiellement de l'ordre de 5000 L/min.

Les moyens d'application de la peinture fraîche 4 comprennent une buse de pulvérisation de ladite peinture 8, laquelle buse de pulvérisation 8 est reliée au réservoir d'air comprimé et à un réservoir de peinture fraîche pour former un ensemble d'application de peinture fraîche sur le support 17, préférentiellement décapé de manière préalable par les moyens de décapage 3. La peinture pulvérisée est une peinture à base d'eau.

Les buses de pulvérisation de peinture 8 et d'aérogommage 7 sont intégrées dans un châssis 9. Le châssis 9 est typiquement une boîte préférentiellement de forme parallélépipédique, et les buses 7, 8 sont solidarisée à une ou plusieurs face interne des parois du châssis 9. Par ailleurs, le châssis 9 comprend au moins deux ouvertures 19 ménagées dans une ou plusieurs des parois du châssis 9, préférentiellement dans une unique paroi du châssis 9 : la sortie de chacune des buses d'aérogommage 7 et de pulvérisation de peinture 8 est alors en vis-à-vis de l'ouverture considérée 19 pour permettre la projection de produit (peinture fraîche et/ou mélange air/abrasif) en dehors du châssis 9 en direction du support de caténaire 17.

Toujours en référence à la figure 5, le système de projection 2 comprend des moyens d'acquisition d'images 10, typiquement une caméra numérique, installée dans le châssis 9 et dont l'objectif est en vis-à-vis d'une troisième ouverture traversante 20 ménagée dans l'une des parois du châssis 9, pour permettre de suivre les opérations d'aérogommage et/ou de peinture sur le support de caténaire 17. Préférentiellement, cette troisième ouverture 20 est bouchée par une vitre transparente 21 de manière à protéger l'objectif de la caméra 10.

Avantageusement, le système de projection 2 comprend des moyens de nettoyage 11 de la vitre 21 (ou de l'objectif de la caméra 10 en l'absence de vitre 21). Ces moyens de nettoyage 11 sont préférentiellement sans contact, et comprennent typiquement une buse de soufflage 12, solidaire d'une face externe de l'une des parois du châssis 9 et reliée au compresseur d'air. Cette buse de soufflage 12 est apte à souffler de l'air comprimé sur la vitre 21 ou l'objectif de la caméra 10 pour les débarrasser des taches et poussières.

Le système de projection 2 comprend également des moyens de commande électriquement reliés aux moyens de décapage 3, aux moyens d'application de la peinture fraîche 4 et à la caméra 10, lesquels moyens de commande sont configurés pour piloter lesdits moyens de décapage 3 et d'application de peinture fraîche 4 et la caméra 10.

De manière à déplacer les moyens de décapage 3 et les moyens d'application de peinture fraîche 4 tout autour du poteau 18 du support de caténaire 17, et plus généralement tout autour du support de caténaire 17, le système de projection 2 comprend un bras articulé multiaxes 5 dont l'extrémité libre est reliée au châssis 9 via un adaptateur 22 solidaire d'une paroi dudit châssis 9. Avantageusement, le bras articulé 5 est un bras robotisé six axes pilotés par une interface homme machine faisant partie intégrante des moyens de commande de l'invention, laquelle interface homme machine comprend typiquement une manette de pilotage munie d'une gâchette de sécurité du type homme-mort. Avantageusement, la manette comprend également des boutons d'activation des moyens de décapage 3 et d'application de la peinture fraîche 4.

Alternativement, et sans sortir du cadre de l'invention, le bras articulé 5 est plus perfectionné et peut comprendre davantage d'axes, et notamment être un robot sept axes pour plus de maniabilité.

Le fait que le bras robotisé 5 soit articulé autour de six axes lui assure une structure mécanique semblable à un bras humain, c'est-à-dire qu'il comprend un premier et un second segments rectilignes 23, 24 reliés entre eux par une première articulation de type charnière 25 pivotante autour d'un premier axe, et reproduisant l'articulation d'un coude.

L'extrémité opposée du premier segment 23 comprend quant à elle une seconde articulation charnière 26 pivotante autour d'un second axe parallèle au premier axe de pivotement de la première articulation charnière 25, laquelle seconde articulation charnière 26 est reliée à une base 27 articulée à rotation selon un axe perpendiculaire aux axes de pivotement des première et seconde articulations charnières 25, 26. Ces deux articulations 26, 27 imitent l'articulation d'une épaule.

Enfin, l'extrémité opposée du second segment 24, reliée aux châssis 9, comprend une articulation rotule 28 et reproduit l'articulation du poignet.

Le bras robotisé 5 peut donc adopter un comportement dynamique proche d'un bras humain, ce qui lui permet de positionner les buses d'aérogommage 7 et de pulvérisation de peinture fraîche 8 en vis-à-vis du poteau 18 du support de caténaire 17, et tout autour de celui-ci.

En particulier, l'interface homme machine permettant de piloter le robot six axes 5 est configurée pour détecter les mouvements et déplacements dans l'espace de la manette par l'utilisateur, et faire reproduire ces mouvements par le bras robotisé six axes 5.

Pour que cette reproduction des mouvements et déplacement soient rendue possible, le système de projection 2 comprend des moyens de détection des obstacles autour du bras robotisé 5, en particulier des moyens de détection par temps de vol type LIDAR 16 (télédétection par laser, de l'anglais « laser imaging detection and ranging ») piloté par les moyens de commande. Ces moyens de détection par temps de vol 16 scannent l'environnement incluant le support de caténaire 17 et reconstituent une carte de données numériques incluant tous les obstacles (en particulier le poteau 18 du support de caténaire 17), en attribuant à chaque point de la carte numérisée une coordonnée de position, enregistrée dans un espace de stockage des moyens de commande.

Grâce à cette opération de numérisation de l'environnement, la vitesse de déplacement du bras robotisé 5 est adaptée en fonction de sa proximité à un obstacle détecté : plus le bras 5 est proche de l'obstacle, plus sa vitesse de déplacement est faible jusqu'à devenir nulle lorsque le bras 5 est à une distance de l'obstacle inférieure à une valeur déterminée, et ceci indépendamment de la vitesse de déplacement de la manette.

Avantageusement, l'interface homme machine est configurée pour appliquer un coefficient multiplicateur réglable entre la distance parcourue par la manette et la distance parcourue par le bras robotisé 5. A titre d'exemple, si la manette se déplace de 50 centimètres selon un axe X et de 25 centimètres selon un axe Y, et que le coefficient multiplicateur est de 2, alors le bras robotisé 5 se déplacera de 1 mètre selon l'axe X et de 50 centimètres selon l'axe Y.

Pour des mouvements du bras robotisé 5 exigeant plus de précision, et notamment à proximité du support de caténaire 17, le coefficient multiplicateur peut être inférieure à 1. A titre d'exemple, si la manette se déplace de 10 centimètres selon un axe X et de 5 centimètres selon un axe Y, et que le coefficient multiplicateur est de 0,5, alors le bras robotisé 5 se déplacera de 5 centimètres selon l'axe X et de 2,5 centimètres selon l'axe Y.

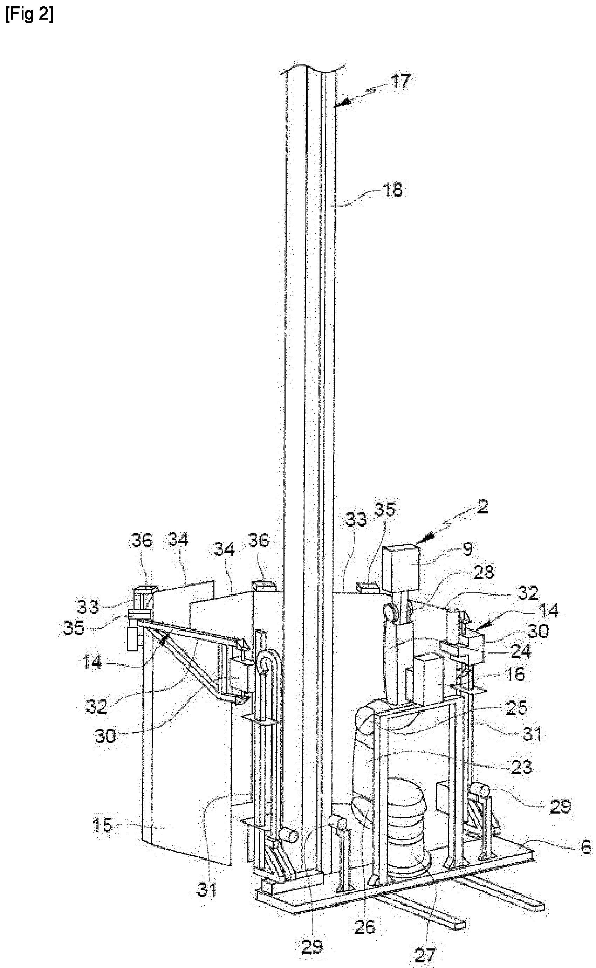

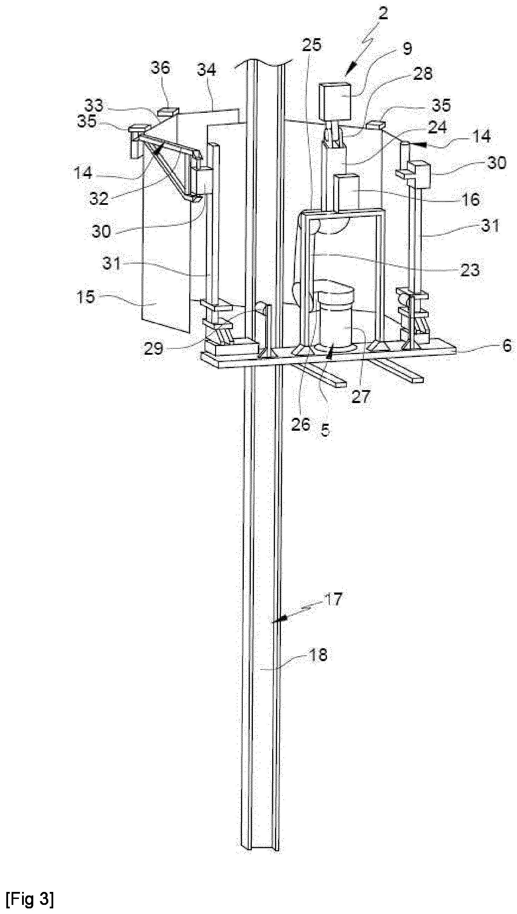

Enfin et en référence aux figures 2 et 3, de manière à déplacer les moyens de décapage 3 et les moyens d'application de peinture fraîche 4 tout le long du poteau 18 du support de caténaire 17, le système de projection comprend une plate-forme élévatrice 6 du bras de déplacement 5, pilotée par les moyens de commande. La plate-forme 6 est donc apte à se déplacer en translation selon un axe parallèle à l'axe du poteau 18 du support de caténaire 17. En outre, la plate-forme 6 est déplaçable en translation dite horizontale, selon un axe perpendiculaire au poteau 18, de manière à se rapprocher ou à s'éloigner de ce dernier. Enfin, la plate-forme peut également être montée à pivotement autour d'un axe parallèle au poteau, de manière à pouvoir évoluer tout autour dudit poteau 18, ce qui permet non seulement d'éviter les obstacles et les câbles électriques de branchement aux moyens de commande et au bras articulé 5, mais également d'améliorer le positionnement du bras articulé 5.

De manière alternative, le système 1 de l'invention peut comprendre un bras articulé 5 disposant de moins d'axes de pivotement/rotation (par exemple 4 ou 5 axes). Dans ce cas, la plate-forme 6 est montée pivotante autour de l'axe de rotation parallèle au poteau 18 de manière à pouvoir évoluer tout autour dudit poteau 18.

Par ailleurs, les moyens de détection comprennent également plusieurs caméras 29 solidarisées à la plate-forme 6 et pilotés par les moyens de commande, afin d'avoir une vue d'ensemble de l'environnement immédiat autour du poteau 18 du support de caténaire 17.

En référence aux figures 1 à 4b, le système de projection 2 comprend des moyens de protection 13 prévus pour entourer au moins en partie le support de caténaire 17, et plus précisément au moins une partie du poteau 18 du support de caténaire 17. Ces moyens de protection 13 permettent ainsi d'éviter, lors des opérations de décapage, que de la peinture ancienne décollée du poteau 18 ne se disperse dans la nature. De la même manière, les moyens de protection 13 permettent d'éviter, lors des opérations d'application de la peinture fraîche, que de la peinture fraîche pulvérisée sur le support de caténaire 17 ne se disperse dans la nature.

Pour que ces moyens de protection 13 soient le plus efficace possible, les opérations de décapage et/ou d'application de peinture fraîche sont réalisées sur le support de caténaire 17 dans un espace délimité entre ledit support 17 et les moyens de protection 13. Cet espace sera nommé dans la suite de la description espace de confinement.

Ces moyens de protection 13 comprennent typiquement deux bras articulés de protection 14 solidaires de la plate-forme élévatrice 6, préférentiellement des bras articulés selon trois axes parallèles entre eux et à l'axe de déplacement en translation verticale de ladite plate-forme 6. Le mouvement de chaque bras articulé 14 est donc circonscrit dans un plan.

Chaque bras articulé de protection 14 comprend donc une base 30 solidaire de la plate-forme 6 par l'intermédiaire d'un rail 31 s'étendant depuis ladite plate-forme 6 selon une direction parallèle à l'axe de translation de la plate-forme 6, et trois segments 32, 33, 34 reliés entre eux par deux articulations charnières 35, 36. Le plan dans lequel le mouvement du bras articulé considéré 14 est circonscrit est donc parallèle au plan de la plate-forme 6.

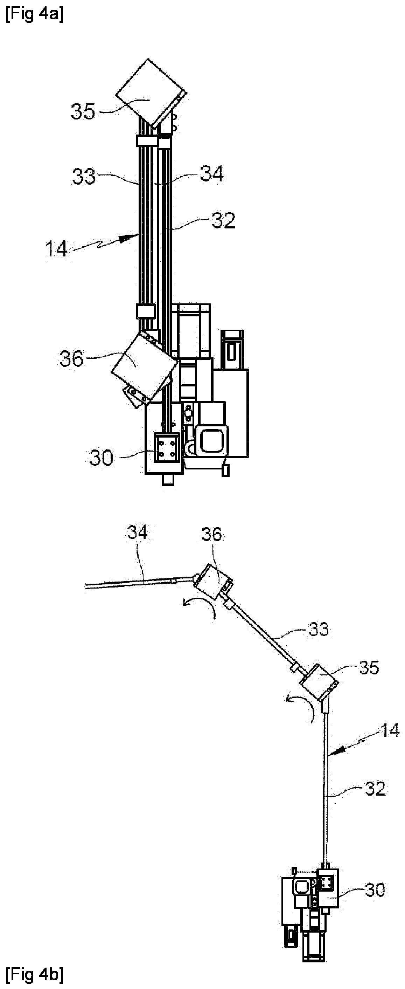

Chaque bras de protection 14 est piloté par les moyens de commande et est actionnable entre une position repliée (fig 4a) et une position déployée (fig 4b). Dans leur position repliée, les deux bras 14 sont sensiblement parallèles entre eux et s'étendent de part et d'autre du poteau 18 de support de caténaire 17. Dans leur position déployée, les segments d'extrémité 34 des deux bras 14 sont en vis et à vis et définissent une zone close qui entoure une partie du poteau 18 du support de caténaire 17. Enfin, les deux bras de protection 14 sont commandés par deux joysticks faisant partie des moyens de commande : les deux bras de protection 14 sont donc indépendants l'un de l'autre.

En outre, les moyens de protection 13 comprennent deux bâches de protection 15 respectivement solidarisées aux deux bras articulés de protection 14. Chaque bâche 15 comprend un bord solidarisé tout le long du bras articulé considéré 14, laquelle bâche 15 s'étend perpendiculairement au plan dans lequel le mouvement du bras articulé considéré 14 est circonscrit. Ainsi, lorsque les bras articulés de protection 14 sont dans leur position déployée, lesdits bras 14 et les bâches 15 définissent l'espace de confinement sensiblement cylindrique entourant une partie du poteau 18 du support de caténaire 17.

L'ensemble comprenant le système de projection 2 décrit ci-dessus et le support de caténaire 17 forme une installation de projection.

Un procédé de projection de produits sur un poteau 18 de support de caténaire 17 en vue de le rénover va maintenant être décrit.

Au cours d'une première étape, la plate-forme 6 est amenée par l'utilisateur via les moyens de commande dans l'une de ses positions extrémales, soit à la base du poteau 18 du support de caténaire 17 (figure 4a), soit au sommet du poteau 18 ou du support de caténaire 17 (figure 4b).

Au cours de la seconde étape, les moyens de commande pilotent le déploiement des bras de protection 14 pour mettre en place l'espace de confinement autour d'une partie du poteau 18 du support de caténaire 17.

Au cours de la troisième étape, les moyens de détection par temps de vol 16, et en particulier le LIDAR 16, scannent l'environnement au niveau du poteau 18 du support de caténaire 17 et attribuent aux obstacles détectés (dont le poteau 18) des coordonnées de positionnement enregistrées dans l'espace de stockage des moyens de commande.

Au cours de la quatrième étape, l'utilisateur commande le bras robotisé six axes 5 afin d'orienter le châssis 9, dans lequel les buses d'aérogommage 7 et d'application de peinture fraîche 8 sont installées, vers une première partie de poteau confinée dans l'espace de confinement entre les bâches 15.

Au cours de la cinquième étape, l'utilisateur pilote les moyens de décapage 3 pour décaper toute la première partie de poteau comprise dans l'espace de confinement.

Au cours de la sixième étape, une fois la première partie de poteau totalement décapée, les moyens de commande pilotent le déplacement de la plate-forme 6 le long du poteau 18 de sorte qu'une deuxième partie du poteau, adjacente à la première partie, soit confinée entre les bâches 15 des moyens de protection 13.

Les cinquième et sixième étapes sont alors répétées jusqu'au décapage de la n^{ème} et dernière partie du poteau 18, et le cas échéant du support de caténaire 17. Le poteau 18, et le cas échéant le support de caténaire 17, sont alors complétement décapés.

Au cours d'une septième étape, la plate-forme 6 étant dans sa position extrémale opposée à celle de la première étape, l'utilisateur pilote les moyens d'application de peinture fraîche 4 pour appliquer de la peinture fraîche sur la n^{ème} partie de poteau comprise dans l'espace de confinement délimité par les bâches 15.

Au cours de la huitième étape, une fois la n^{ème} partie de poteau totalement repeinte, les moyens de commande pilotent le déplacement de la plate-forme 6 le long du poteau 18 de sorte qu'une n-1^{ème} partie du poteau, adjacente à la n^{ème} partie, soit confinée entre les bâches 15 des moyens de protection 13.

Les septième et huitième étapes sont alors répétées jusqu'à l'application de peinture fraîche sur la totalité de la première partie du poteau. Le poteau 18, et le cas échéant le support de caténaire 17, sont alors complétement repeints.

De manière alternative, les étapes 6 à 8 sont remplacées par deux opérations successives respectivement de décapage et d'application de peinture fraiche sur chaque partie du poteau 18.

Plus précisément, une fois le décapage de la première partie de poteau 18 effectuée lors de la cinquième étape ci-dessus, les moyens de commande pilotent les moyens d'application de peinture fraiche 4 de manière à appliquer de la peinture fraiche sur l'ensemble de la première partie de poteau décapé 18.

Les moyens de commande pilotent alors la translation verticale de la plate-forme 6 vers la deuxième partie du poteau 18, adjacente à la première partie, et les opérations successives de décapage puis d'application de peinture fraiche sont réalisées sur cette deuxième partie. Ces opérations successives de décapage puis d'application de peinture fraiche sont répétées jusqu'à la n^{ième} et dernière partie du poteau 18.

Cette alternative de réalisation présente l'avantage de pouvoir interrompre l'activité de restauration du support de caténaire 17 sans laisser de portion décapée mais non repeinte. On évite ainsi tout risque de corrosion.

Au cours de la neuvième étape, la plate-forme 6 est ramenée - au besoin - vers sa position d'extrémité à la base du poteau 18 par les moyens de commande.

Au cours de la dixième et dernière étape, les moyens de commande actionnement les bras articulés de protection 14 vers leur position repliée.

Le procédé décrit ci-dessus peut alors être mis en œuvre sur un autre support de caténaire 17 à rénover.

## Revendications

1. Système de projection (1) d'au moins un produit sur un support de caténaire (17), comprenant :
- des moyens de projection (2) du produit sur ledit support (17),
- des moyens de commande desdits moyens de projection (2) du produit,
- un bras de déplacement (5) des moyens de projection du produit (2), lequel bras de déplacement (5) est articulé multiaxes rendant les moyens de projection (2) susceptibles d'être déplacés autour du support de caténaire (17), et piloté par les moyens de commande,
- une plate-forme élévatrice (6) du bras de déplacement (5) et pilotée par les moyens de commande, et **caractérisé en ce que**
- des moyens de protection (13) sont configurés pour entourer au moins une partie du support de caténaire (17).

2. Système de projection (1) selon la revendication précédente, **caractérisé en ce que** les moyens de projection (2) comprennent des moyens d'application d'une peinture fraîche sur le support caténaire (17).

3. Système de projection (1) selon la revendication 1 ou 2, **caractérisé en ce que** les moyens de projection (2) comprennent des moyens de décapage mécanique (3) d'une ancienne peinture préalablement appliquée sur le support de caténaire (17).

4. Système de projection (1) selon les revendications 2 et 3, **caractérisé en ce que** les moyens de décapage (3) et les moyens d'application (4) de la peinture fraiche comprennent respectivement une buse de sablage ou d'aérogommage (7) et une buse de pulvérisation (8) de la peinture fraiche solidaires d'un châssis (9), lequel châssis (9) est solidaire d'une extrémité du bras de déplacement (5).

5. Système de projection (1) selon la revendication précédente, **caractérisé en ce qu'**il comprend des moyens d'acquisition d'images (10) solidaire du châssis (9).

6. Système de projection (1) selon la revendication précédente, **caractérisé en ce qu'**il comprend des moyens de nettoyage (11) des moyens d'acquisition d'images (10).

7. Système de projection (1) selon la revendication précédente, **caractérisé en ce que** les moyens de nettoyage (11) comprennent une buse de soufflage d'air comprimé (12) solidaire du châssis (9).

8. Système de projection (1) selon l'une quelconque des revendications précédentes, **caractérisé en ce que** les moyens de protection (13) comprennent deux bras articulés de protection (14) entre une position repliée et une position déployée dans laquelle lesdits deux bras de protection (14) sont aptes à entourer au moins une partie du support de caténaire (17), et deux bâches de protection (15) chacune comprenant un bord solidaire du bras de protection considéré (14), chaque bâche (15) s'étendant tout le long du bras de protection considéré (14).

9. Système de projection (1) selon l'une quelconque des revendications précédentes, **caractérisé en ce qu'**il comprend des moyens de détection des obstacles, notamment des moyens de détection par temps de vol (16).

10. Système de projection (1) selon l'une quelconque des revendications précédente, **caractérisé en ce que** les moyens de commande comprennent une manette de pilotage du bras de déplacement (5), laquelle manette comprend au moins une gâchette homme mort.

11. Installation de projection comprenant un support de caténaire (17) et un système de projection (1) selon l'une quelconque des revendications précédentes.

## Patentansprüche

1. System zum Spritzen (1) mindestens eines Produkts auf einen Fahrleitungsträger (17), beinhaltend:
- Mittel zum Spritzen (2) des Produkts auf den Träger (17),
- Mittel zum Steuern der Mittel zum Spritzen (2) des Produkts,
- einen Arm zum Bewegen (5) der Mittel zum Spritzen des Produkts (2), wobei der Bewegungsarm (5) um mehrere Achsen gelenkig beweglich ist, sodass die Spritzmittel (2) um den Fahrleitungsträger (17) herum bewegt werden können, und durch die Steuermittel angesteuert wird,
- eine Hubplattform (6) für den Bewegungsarm (5), die durch die Steuermittel angesteuert wird, und **dadurch gekennzeichnet, dass** Schutzmittel (13) dazu konfiguriert sind, mindestens einen Teil des Fahrleitungsträgers (17) zu umgeben.

2. Spritzsystem (1) nach dem vorhergehenden Anspruch, **dadurch gekennzeichnet, dass** die Spritzmittel (2) Mittel zum Aufbringen eines frischen Farbanstrichs auf den Fahrleitungsträger (17) beinhalten.

3. Spritzsystem (1) nach Anspruch 1 oder 2, **dadurch gekennzeichnet, dass** die Spritzmittel (2) Mittel zum mechanischen Abtragen (3) eines alten Farbanstrichs, der zuvor auf den Fahrleitungsträger (17) aufgebracht wurde, beinhalten.

4. Spritzsystem (1) nach den Ansprüchen 2 und 3, **dadurch gekennzeichnet, dass** die Mittel zum Abtragen (3) und die Mittel zum Aufbringen (4) des frischen Farbanstrichs jeweils eine Düse zum Sandstrahlen oder Niederdrucksandstrahlen (7) bzw. eine Düse zum Sprühen (8) des frischen Farbanstrichs beinhalten, die mit einem Träger (9) fest verbunden sind, wobei der Träger (9) mit einem Ende des Bewegungsarms (5) fest verbunden ist.

5. Spritzsystem (1) nach dem vorhergehenden Anspruch, **dadurch gekennzeichnet, dass** es Bildaufnahmemittel (10) beinhaltet, die mit dem Träger (9) fest verbunden sind.

6. Spritzsystem (1) nach dem vorhergehenden Anspruch, **dadurch gekennzeichnet, dass** es Mittel zum Reinigen (11) der Bildaufnahmemittel (10) beinhaltet.

7. Spritzsystem (1) nach dem vorhergehenden Anspruch, **dadurch gekennzeichnet, dass** die Reinigungsmittel (11) eine Druckluftblasdüse (12) beinhalten, die mit dem Träger (9) fest verbunden ist.

8. Spritzsystem (1) nach einem der vorhergehenden Ansprüche, **dadurch gekennzeichnet, dass** die Schutzmittel (13) Folgendes beinhalten: zwei Schutzarme (14), die zwischen einer eingefahrenen Stellung und einer ausgefahrenen Stellung, in der die zwei Schutzarme (14) dazu fähig sind, mindestens einen Teil des Fahrleitungsträgers (17) zu umgeben, gelenkig beweglich sind, und zwei Schutzplanen (15), die jeweils einen Rand beinhalten, der mit dem betrachteten Schutzarm (14) fest verbunden ist, wobei sich jede Plane (15) entlang des gesamten betrachteten Schutzarms (14) erstreckt.

9. Spritzsystem (1) nach einem der vorhergehenden Ansprüche, **dadurch gekennzeichnet, dass** es Mittel zur Detektion von Hindernissen, insbesondere Mittel zur Detektion durch Laufzeitmessung (16), beinhaltet.

10. Spritzsystem (1) nach einem der vorhergehenden Ansprüche, **dadurch gekennzeichnet, dass** die Steuermittel einen Hebel zum Ansteuern des Bewegungsarms (5) beinhalten und der Hebel mindestens einen Totmannschalter beinhaltet.

11. Spritzanlage, beinhaltend einen Fahrleitungsträger (17) und ein Spritzsystem (1) nach einem der vorhergehenden Ansprüche.

## Claims

1. System (1) for spraying at least one product onto a catenary support (17), comprising:
- spraying means (2) for spraying the product onto said support (17),
- control means controlling said product-spraying means (2),
- a displacement arm (5) for moving the product-spraying means (2), which displacement arm (5) has multi-axis articulation making the spraying means (2) capable of being moved around the catenary support (17), under the control of the control means,
- a lifting platform (6) for raising the displacement arm (5), controlled by the control means, wherein protective means (13) are configured to surround at least part of the catenary support (17).

2. Spraying system (1) according to the preceding claim, wherein the spraying means (2) comprise means for applying fresh paint to the catenary support (17).

3. Spraying system (1) according to Claim 1 or 2, wherein the spraying means (2) comprise mechanical-stripping means (3) for stripping old paint previously applied to the catenary support (17).

4. Spraying system (1) according to Claims 2 and 3, wherein the stripping means (3) and the fresh-paint application means (4) respectively comprise a sandblasting or compressed-air blasting nozzle (7) and a fresh-paint spray nozzle (8) which are secured to a frame (9), which frame (9) is secured to one end of the displacement arm (5).

5. Spraying system (1) according to the preceding claim, wherein it comprises image-acquisition means (10) secured to the frame (9).

6. Spraying system (1) according to the preceding claim, wherein it comprises cleaning means (11) for cleaning the image-acquisition means (10).

7. Spraying system (1) according to the preceding claim, wherein the cleaning means (11) comprise a compressed-air blowing nozzle (12) secured to the frame (9).

8. Spraying system (1) according to any one of the preceding claims, wherein the protective means (13) comprise two protective arms (14) articulated between a folded position and a deployed position in which said two protective arms (14) are able to surround at least part of the catenary support (17), and two protective tarpaulins (15) each having one edge secured to the relevant protective arm (14), each tarpaulin (15) extending along the entire length of the relevant protective arm (14).

9. Spraying system (1) according to any one of the preceding claims, wherein it comprises obstacle-detection means, notably time-of-flight detection means (16).

10. Spraying system (1) according to any one of the preceding claims, wherein the control means comprise a joystick for controlling the displacement arm (5), which joystick comprises at least one dead-man's switch.

11. Spraying installation comprising a catenary support (17) and a spraying system (1) according to any one of the preceding claims.
